# EUROPEAN PATENT SPECIFICATION

(11) **EP 4 254 645 B1**
(45) Date of publication and mention of the grant of the patent: **04.03.2026**
(21) Application number: 22861719.7
(22) Date of filing: 24.08.2022
(51) Int. Cl.: H01M 50/569, H01M 50/519, H01M 50/298, H01M 50/213, H01M 10/48, H01M 50/559, H01M 50/548, H01M 50/516, H01M 50/507, H01M 50/50, H01M 50/284, H01M 50/271, H01M 50/20, H01M 50/191, H01M 50/186, H01M 50/169, H01M 50/107, H01M 10/42, H01M 10/0587, H01M 10/04

(54) **BATTERY MODULE HAVING IMPROVED WIRE BONDING CONNECTION STRUCTURE BETWEEN BUS BAR PLATE AND ICB ASSEMBLY, AND BATTERY PACK INCLUDING THE SAME**
BATTERIEMODUL MIT VERBESSERTER DRAHTBONDVERBINDUNGSSTRUKTUR ZWISCHEN SAMMELSCHIENENPLATTE UND ICB-ANORDNUNG UND BATTERIEPACK DAMIT
MODULE DE BATTERIE DOTÉ D'UNE STRUCTURE AMÉLIORÉE DE CONNEXION PAR LIAISON FILAIRE ENTRE UNE PLAQUE DE BARRES OMNIBUS ET UN ENSEMBLE ICB, ET BLOC-BATTERIE COMPRENANT CELUI-CI

(30) Priority: 27.08.2021 KR 20210114128
(43) Date of publication of application: 04.10.2023
(73) Proprietor: LG Energy Solution, Ltd., Seoul 07335 (KR)
(72) Inventor: JEON, Byeong-Jun, Daejeon 34122 (KR); LEE, Young-Kyu, Daejeon 34122 (KR); SON, Young-Su, Daejeon 34122 (KR)
(74) Representative: Plasseraud IP
(86) International application number: PCT/KR2022/012677
(87) International publication number: WO 2023/027511

(56) References cited:
- EP-A1- 3 696 878
- EP-A1- 3 770 994
- WO-A1-2020/045045
- DE-A1- 102012 205 020
- KR-A- 20180 039 526
- KR-B1- 101 864 290
- KR-B1- 102 047 483
- KR-B1- 102 248 229
- US-A1- 2018 151 921
- US-A1- 2020 185 683
- US-A1- 2020 212 381

## Description

### TECHNICAL FIELD

The present application claims priority to Korean Patent Application No. 10-2021-0114128 filed on August 27, 2021 in the Republic of Korea.

The present disclosure relates to a battery module, and more specifically, to a battery module efficiently improving the assembly position and connection structure of a bus bar plate and an inter connection board (ICB) assembly, which are components for electrical connection or voltage sensing of battery cells, and a battery pack including the same.

### BACKGROUND ART

Secondary batteries have high applicability according to product groups and electrical characteristics such as high energy density, and thus are commonly applied not only to portable devices but also to electric vehicles (EVs), hybrid electric vehicles (HEVs), or electric scooters driven by electric power sources. Such a secondary battery is attracting attention as a new energy source to improve eco-friendliness and energy efficiency in that it has not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. An operating voltage of the unit secondary battery cell, namely a unit battery cell, is about 2.5 V to 4.5 V. Therefore, currently, a single secondary battery (cell) is not capable of obtaining sufficient output to drive, for example, an electric scooter. In order to apply a secondary battery as an energy source for an electric scooter, for example, a battery module in which a plurality of lithium-ion battery cells are connected in series and/or in parallel should be configured, and in general, a battery pack including a battery management system (BMS), a battery disconnection unit (BDU), electrical connection parts, and the like for connecting the battery modules in series and maintaining the same functionally is configured.

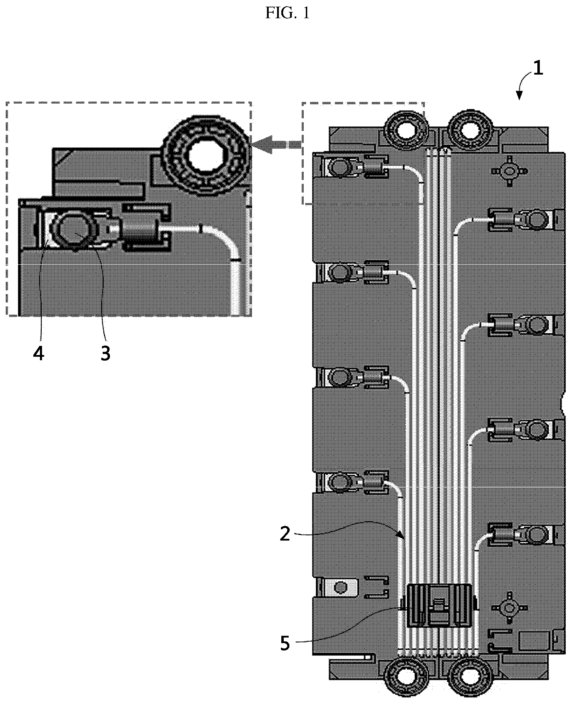

Meanwhile, the battery module 1 or the battery pack according to the prior art uses the cable connector 2 as an example of a configuration for sensing the voltage information of the battery cells and transmitting it to the BMS, thereby connecting the terminals 3 of each cable (connected to the positive electrode or negative electrode of the battery cell) to the metal plates 4 and connecting a connector 5 to the BMS circuit board (not shown), as shown in FIG. 1. At this time, the terminals of each cable are fixedly coupled to each metal plate 4 by welding, bolting, and riveting. However, the components for voltage sensing and the electrical connection configuration of the components require a lot of time to assemble and act as an obstacle to simplifying the structure of the battery module.

Accordingly, in order to simplify and streamline the design of a battery module or a battery pack, recently, voltage sensing components provided in the form of a printed circuit board instead of a bus bar plate and the cable connector are widely used for electrical connection of battery cells or electrical connection of voltage sensing components, and wire bonding technology is widely used as an electrical connection method.

However, the wire bonding technology is a method of ultrasonically welding both ends of a very thin metal wire to a connection object, so there is a risk of wire breakage in case of external impact. In particular, if the bus bar plate or the voltage sensing component is moved even a little due to external impact or vibration, the wire between the bus bar plate and the voltage sensing component may be easily disconnected, and in this case, it is impossible to sense the voltage of the battery cells, which may cause a problem in the function of the battery module.

Further prior art is described in US 2020/185683 A1 disclosing a battery module with the features of the preamble portion of patent claim 1.

### DISCLOSURE

### Technical Problem

The present disclosure is designed to solve the problems of the related art, and therefore the present disclosure is directed to providing a battery module that prevents wire breakage even from external impact or vibration by improving the assembly position and structure between the bus bar plate and the ICB assembly.

That is, the present disclosure is directed to providing a battery module capable of not only changing the configuration, assembly structure, and connection method of components for electrical connection and voltage sensing of battery cells more efficiently than in the prior art, but also sufficiently securing electrical connection rigidity, and a battery pack including the same, wherein the invention is defined in the appended claims.

However, technical problems to be solved by the present disclosure are not limited to the above-described problems, and other problems not mentioned herein may be clearly understood by those skilled in the art from the following description of the present disclosure.

### Technical Solution

A battery module according to an aspect of the present disclosure for achieving the above object includes battery cells having a battery can and a top cap coupled to the battery can; a cell frame provided to accommodate and fix the battery cells therein; bus bar plates spaced apart from each other and disposed on an outer side of the cell frame and electrically connected to the battery cells; and an inter connection board (ICB) assembly having sensing plates electrically connected to the bus bar plates, respectively, and mounted on the other outer side of the cell frame, wherein each of the bus bar plates and each of the sensing plates have portions that overlap partially in an up-down direction and are integrally fixed to each other so as not to move relative to each other, and is electrically connected by a conductive wire, wherein one end of the sensing plate is positioned under one end of the bus bar plate, and this one end of the sensing plate has a 'U'-shaped rabbit ear part.

One end of the sensing plate may be seated on an adhesive applied to the surface of the cell frame, and one end of the bus bar plate may be mutually bonded to one end of the sensing plate by the adhesive coming up through the rabbit ear part.

The cell frame may include a side portion forming a wall surrounding the outside of the entire battery cells and an upper surface portion covering the top of the battery cells, and one end of the bus bar plates and one end of the sensing plates may be disposed to overlap each other at one edge of the upper surface portion.

The ICB assembly may further include a printed circuit board to which the sensing plates are coupled; and a cable connector mounted on the printed circuit board, wherein the printed circuit board may be disposed such that a plate surface thereof faces a side portion of the cell frame.

The sensing plate may be provided in a '¬' shape and, may include a substrate mounting portion attached to the printed circuit board and a frame mounting portion bent and extended with respect to the substrate mounting portion, wherein the frame mounting portion may be disposed to face an edge surface of the upper surface portion of the cell frame.

The upper surface portion may include first plate seating grooves extending along the lengthwise direction of the cell frame to be provided at predetermined intervals along the widthwise direction of the cell frame, and provided such that the bus bar plate may be seated; and second plate seating grooves provided at one edge of the cell frame and straightly connected to each of the first plate seating grooves, the surface of which is formed lower than the first plate seating grooves, and provided such that the sensing plate may be seated.

The first plate seating groove may have a bus bar hanging pin formed to protrude from the surface thereof, and the bus bar plate may have a pin hole into which the bus bar hanging pin may be inserted.

The second plate seating groove may be provided to be shape-fitted with the rabbit ear part of the sensing plate.

The cell frame may include a cell bottom frame having cell insertion holes capable of respectively inserting lower regions of the battery cells; and a cell top frame that covers upper regions of the battery cells and is provided to be coupled to the cell bottom frame.

The battery cells may be cylindrical battery cells, and may be inserted into the cell bottom frame to be disposed so that the top cap faces the cell top frame.

The cell top frame may include an upper surface portion covering the upper side of the battery cells, wherein the upper surface portion may have first holes perforated so that each top cap of the battery cells may be exposed to the outside, and second holes perforated so that the upper ends of each battery can of the battery cells may be partially exposed to the outside.

Each of the bus bar plates may be connected to the top cap exposed through the first holes or the upper end of the battery can exposed through the second holes by wires.

One end of the sensing plate may be positioned under one end of the bus bar plate, and an ICB hanging pin formed to protrude from the surface of the cell frame on which one end of the sensing plate is seated may be provided, wherein one end of the sensing plate may have a through hole into which the ICB hanging pin may be inserted.

According to another aspect of the present disclosure, there may be provided a battery pack including the battery module described above.

### Advantageous Effects

According to the present disclosure, there is provided a battery module that prevents wire breakage even from external impact or vibration by improving the assembly position and structure between the bus bar plate and the ICB assembly.

In addition, according to the present disclosure, there is provided a battery module that simplifies the wiring structure, and the like as a whole and has excellent reliability in electrical connection by efficient configuration, assembly structure, and connection method of components for electrical connection of battery cells and voltage sensing, and a battery pack including the same.

However, effects to be obtained by the present disclosure are not limited to the above-described effects, and other effects not mentioned herein may be clearly understood by those skilled in the art from the following description of the present disclosure.

### DESCRIPTION OF DRAWINGS

FIG. 1 is a view illustrating an electrical connection structure for voltage sensing of a battery pack according to the prior art.
FIG. 2 is a perspective view illustrating a main configuration of a battery module according to an embodiment of the present disclosure.
FIG. 3 is an exploded perspective view of the battery module of FIG. 2.
FIG. 4 is a view illustrating an area of a battery module before assembling a bus bar plate and an ICB assembly according to an embodiment of the present disclosure.
FIG. 5 is a partially enlarged view of FIG. 4.
FIG. 6 is a perspective view illustrating the ICB assembly of FIG. 3.
FIG. 7 is a view illustrating an area of a battery module in a state where a bus bar plate and an ICB assembly are assembled according to an embodiment of the present disclosure.
FIG. 8 is a partially cut-away perspective view of FIG. 7.
FIG. 9 is a cut-away perspective view taken along line A-A' of FIG. 8.
FIG. 10 is a view illustrating a second plate seating groove and a sensing plate of a battery module according to another embodiment of the present disclosure.
FIG. 11 is a cross-sectional view illustrating an assembly structure of a bus bar plate and a sensing plate according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

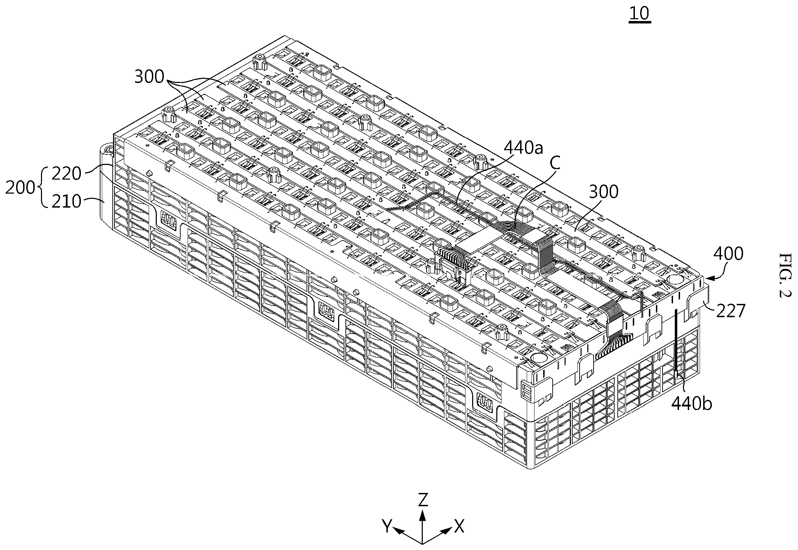

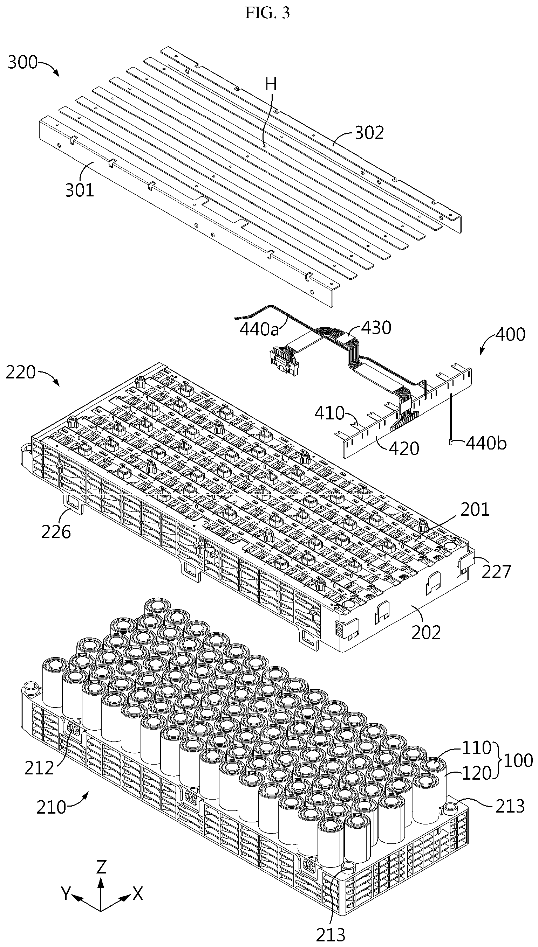

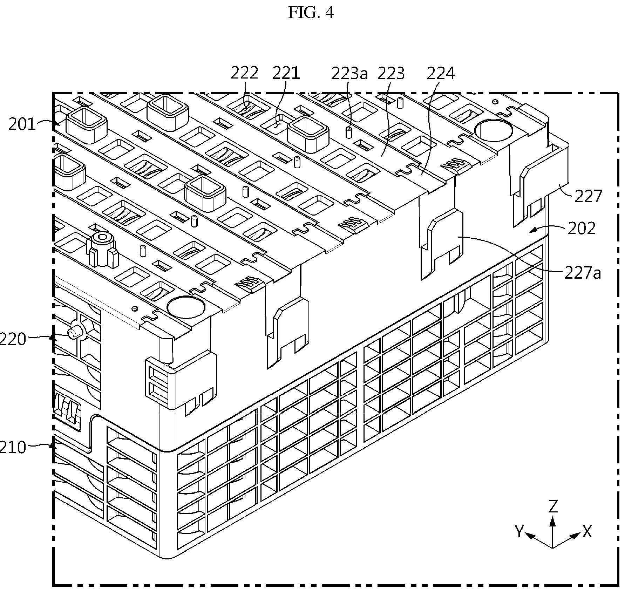

FIG. 2 is a perspective view illustrating a main configuration of a battery module according to an embodiment of the present disclosure, FIG. 3 is an exploded perspective view of the battery module of FIG. 2, and FIG. 4 is a view illustrating an area of a battery module before assembling a bus bar plate and an ICB assembly according to an embodiment of the present disclosure.

Referring to these drawings, the battery module 10 according to an embodiment of the present disclosure includes battery cells 100, a cell frame 200, bus bar plates 300, and an ICB assembly 400 having sensing plates 410 electrically connected to the bus bar plates 300, respectively and mounted on the other side of the outer side of the cell frame 200.

The battery cells 100 may be cylindrical battery cells 100 in which an electrode assembly is embedded in a metal can. The cylindrical battery cell 100 may be configured to include a battery can 120 mainly made of a lightweight conductive metal material such as aluminum in a cylindrical shape, a jelly-roll type electrode assembly accommodated in the battery can 120, and a top cap 110 coupled to the upper portion of the battery can 120. The top cap 110 is connected to the positive electrode tab of the electrode assembly to function as a positive electrode terminal, and the battery can 120 is connected to the negative electrode tab of the electrode assembly to function as a negative electrode terminal.

The cylindrical battery cell 100 is inserted and disposed in the cell frame 200, and the cylindrical battery cells 100 are bonded to the bus bar plates 300 by wire 500 in a predetermined pattern to be connected in series and/or in parallel to each other. A more detailed description of this will be given later.

On the other hand, the scope of the present disclosure need not be necessarily interpreted to be limited to the battery module 10 to which the cylindrical battery cell 100 is applied. For example, the battery module 10 according to the present disclosure may be configured using a can-type battery cell having a rectangular parallelepiped shape or other shape, other than a cylindrical shape in the battery can 120.

The cell frame 200 is a structure for accommodating and fixing the battery cells 100 therein to protect the battery cells 100 from external impact or vibration, and in the present embodiment, it is configured to include the cell bottom frame 210 and the cell top frame 220.

The cell bottom frame 210 is configured to have cell insertion holes inside the outer rim in a rectangular box shape and to insert the battery cells 100 into the cell insertion holes one by one. For example, as shown in FIG. 3, the battery cells 100 may be inserted and disposed in each cell insertion hole such that the top cap 110 faces upward and the lower region, that is, the bottom of the battery can 120 faces downward. Here, the cell insertion hole is configured to penetrate the bottom surface of the cell bottom frame 210. Accordingly, the bottom of the battery can 120 of the battery cells 100 may be exposed below the bottom surface of the cell bottom frame 210. Although not shown in the drawing for convenience, it may also be configured such that a thermally conductive pad having insulation is attached to the bottom surface of the cell bottom frame 210 and a cooling plate or a heat sink (including a refrigerant therein) is attached to the other surface of the thermally conductive pad, thereby absorbing heat of the cylindrical battery cells 100.

The cell bottom frame 210 may be firmly coupled to the cell top frame 220 by a long bolt (not shown) together with hook fastening. For example, as shown in FIG. 3, the cell bottom frame 210 and the cell top frame 220 may have a locking member 212 and a locking hole 226 capable of locking and coupling the locking member 212 on the side portion (long side), respectively, both of which may be coupled to each other in a snap-fit manner. In addition, after snap-fit fastening the cell bottom frame 210 and the cell top frame 220, a bushing and a long bolt (not shown) may be inserted into the bolt insertion hole 213 provided in the corner portion to reinforce the coupling rigidity of the cell bottom frame 210 and the cell top frame 220.

The cell top frame 220 covers an upper region of the battery cells 100 and is configured to be coupled to the cell bottom frame 210.

For example, as shown in FIG. 3, the cell top frame 220 has cell sockets (not shown) matching the cell insertion holes of the cell bottom frame 210 up and down, and when the cell top frame 220 and the cell bottom frame 210 are coupled, the battery cells 100 may be introduced into the cell sockets from the top cap 110 so that an upper region of the entire battery cells 100 is covered by the cell top frame 220.

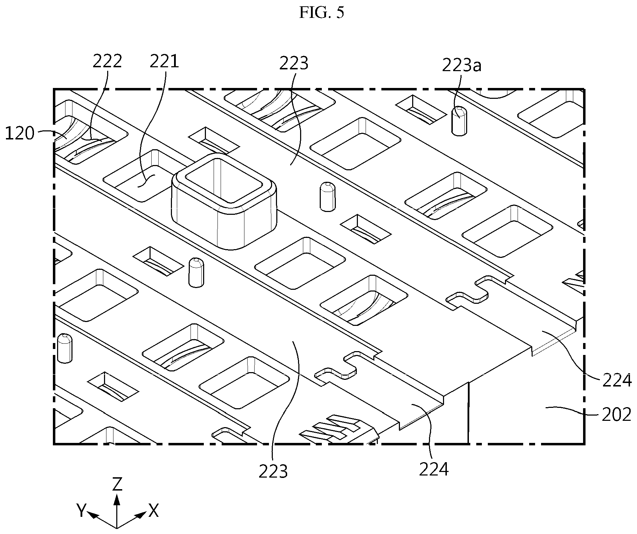

In addition, the cell top frame 220 includes an upper surface portion 201 covering the top of the entire battery cells 100 and four side portions 202 forming a wall surrounding the outside of the entire battery cells 100 together with the cell bottom frame 210, wherein the upper surface portion 201, as shown in FIGS. 4 to 5, has first holes 221, second holes 222, first plate seating grooves 223, and second plate seating grooves 224.

The first holes 221 have a configuration in which the cell top frame 220 is partially perforated so that the center of each top cap 110 of the battery cells 100 may be exposed to the outside, and the second holes 222 have a configuration in which the cell top frame 220 is partially perforated so that the upper end of each battery can 120 of the battery cells 100 may be partially exposed to the outside.

For example, as shown in FIGS. 3 and 4, the cell bottom frame 210, when the battery cells 100 are inserted therein, is configured such that the battery cells 100 form seven rows in the widthwise direction (X-axis direction) of the cell frame 200, and when such battery cells 100 are covered with the cell top frame 220, the center of the top cap 110 of each battery cell 100 is exposed to the outside through the corresponding first hole 221, and the upper edge of the battery can 120 of each battery cell 100 is exposed to the outside through the corresponding second hole 222.

The first holes 221 and the second holes 222 are used as paths for connecting the battery cells 100 located inside the cell frame 200 to the bus bar plates 300 located outside the cell frame 200 by metal wires 500. For example, the bus bar plate 300 may be connected to the top cap 110 exposed through the first holes 221 or the upper end of the battery can 120 exposed through the second holes 222 by a metal wire 500. For example, a wire bonding method in which one end of the metal wire 500 is ultrasonically welded to the top cap 110 or an upper end of the battery can 120 and the other end of the metal wire 500 is ultrasonically welded to the bus bar plate 300 may be employed.

The first plate seating groove 223 is a place where the bus bar plate 300 is to be seated and fixed, and may extend along the lengthwise direction (Y-axis direction) of the cell frame 200 to be provided at predetermined intervals in the widthwise direction (X-axis direction) of the cell frame 200. For example, a total of eight first plate seating grooves 223 according to the present embodiment may be provided between rows of the battery cells 100 from the left side of the first row battery cells 100 to the right side of the seventh row battery cells 100. A bus bar plate 300, which is a straight metal conductor having the same left and right widths, may be disposed in each of the first plate seating grooves 223.

The bus bar plate 300 has the same left and right widths as the first plate seating groove 223, so that its movement in the widthwise direction (X-axis direction) may be blocked, and in the lengthwise direction, its movement may be blocked by the bus bar hanging pin 223a. The bus bar hanging pin 223a may be provided in the form of a pin or a pillar formed to protrude from the surface of the first plate seating groove 223 (in the Z-axis direction). The bus bar plate 300 has a pin hole H corresponding to the diameter of the bus bar hanging pin 223a. When the bus bar plate 300 is seated in the first plate seating groove 223, the bus bar hanging pin 223a may be inserted into the pin hole H. The bus bar hanging pin 223a and the pin hole H may be provided in plurality, and may serve to prevent movement of the bus bar plate 300 and guide the assembly direction.

In the present embodiment, eight first plate seating grooves 223 may be provided, and eight bus bar plates 300 may be disposed in the eight first plate seating grooves 223. Here, the first bus bar plate 301 and the eighth bus bar plate 302 may be enabled as the positive electrode terminal and the negative electrode terminal of the entire battery module 10, and unlike the other bus bar plates 300, they may be configured to partially surround the side portion 202 of the cell top frame 220 in an angled shape.

For example, the first bus bar plate 301 and the top cap 110 of the first row battery cells 100 are bonded by wires 500, and the second bus bar plate 300 and the upper edge of the battery can 120 of the second row battery cells 100 are bonded by wires 500, so that the first row battery cells 100 and the second row battery cells 100 may be respectively connected in parallel, and the battery cells between the first row battery cells 100 and the second row battery cells 100 may be connected in series with each other. When the battery cells 100 and the bus bar plates 300 are connected by wires 500 in this way, the battery cells 100 in the same row from the first to the seventh row battery cells 100 are connected in parallel, and the battery cells 100 in adjacent rows may be connected in series.

The second plate seating groove 224 is a place where the sensing plate 410 is to be seated and fixed, and is straightly connected to each of the first plate seating grooves 223 at one edge of the cell frame 200, but the surface thereof may be formed lower than the first plate seating groove 223.

That is, as shown in FIGS. 4 to 5, a step is placed between the first plate seating groove 223 and the second plate seating groove 224 to configure the second plate seating groove 224 to be lower than the first plate seating groove 223, and thus, after disposing the sensing plate 410 in the second plate seating groove 224, the bus bar plate 300 may be disposed in the first plate seating groove 223, thereby overlapping one end of the bus bar plates 300 and one end of the sensing plates 410 each other up and down.

The sensing plates 410 are configured to be electrically connected to each of the bus bar plates 300 in order to read the voltage of each bank (battery cells connected in parallel) of the battery cells 100, and are the main component of an inter connection board (ICB) assembly.

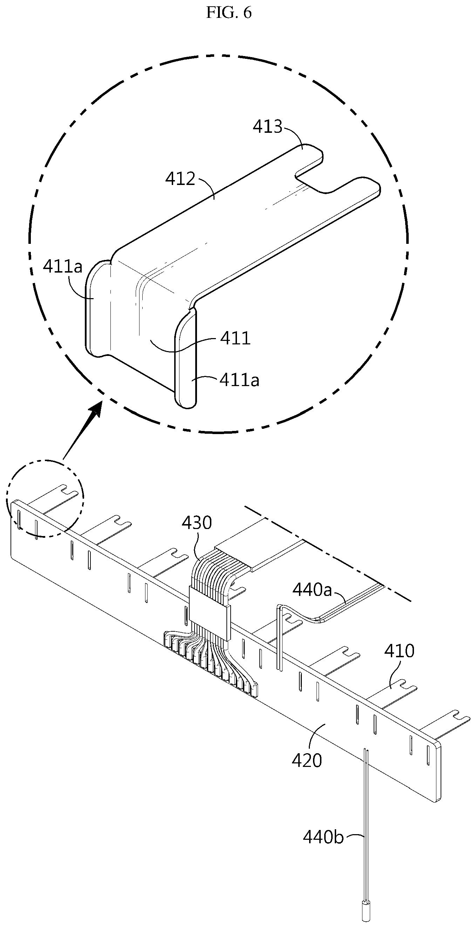

Here, the ICB assembly 400 refers to a component for sensing the voltage or temperature of the battery cells 100 and transmitting it to the BMS (not shown). The ICB assembly 400 according to the present embodiment includes a plurality of sensing plates 410, a printed circuit board 420, a cable connector 430, and temperature sensors 440a, 440b, as shown in FIG. 6. The plurality of sensing plates 410 are made of metal material such as nickel and provied in an approximately '¬' or ' 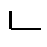 ' shape. Each of the sensing plate 410 includes a substrate mounting portion 411 attached to the printed circuit board 420 and a frame mounting portion 412 bent and extended with respect to the substrate mounting portion 411.

The printed circuit board 420 has a pair of long holes at each predetermined position, and the substrate mounting portion 411 of each sensing plate 410 has a fitting pin 411a to be fitted into the pair of long holes. Each sensing plate 410 may be fixed and electrically connected to the printed circuit board 420 by, for example, soldering after the fitting pin 411a is inserted into the long hole of the printed circuit board 420.

As shown in FIG. 6, the plurality of sensing plates 410 are spaced apart along the lengthwise direction of the printed circuit board 420, and each of the substrate mounting portions 411 is mounted to face the plate surface of the printed circuit board 420, so that each of the frame mounting portions 412 forms a 90 degree angle with the plate surface of the printed circuit board 420.

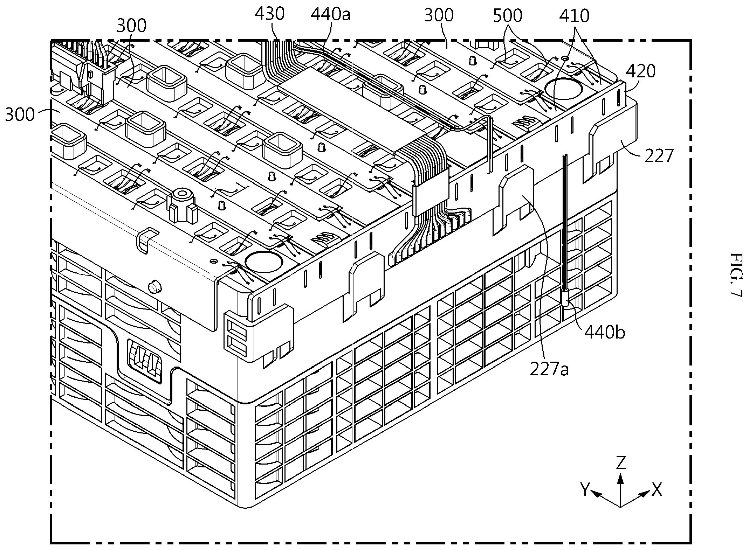

When the printed circuit board 420 is disposed to face the side portion 202 of the cell frame 200 as shown in FIG. 7, the frame mounting portion 412 of each sensing plate 410 may be disposed to face the second plate seating groove 224 of the cell top frame 220.

As described above, in order to place the printed circuit board 420 facing the side portion 202 of the cell frame 200, a pair of substrate holders 227 configured to insert the printed circuit board 420 into the side portion 202 of the cell frame 200 from top to bottom and to partially surround both ends of the printed circuit board 420 to support it, and a plurality of substrate supports 227a configured to support portions between both ends of the printed circuit board 420 between the pair of substrate holders 227 may be provided.

The cable connector 430 is a means for transmitting sensed voltage information or temperature information to the BMS, and may be composed of a plurality of cables C and connectors. One side of the plurality of cables C is mounted on the surface of the printed circuit board 420, and the other side thereof is connected to a connector. The connector may be connected to another connector provided in the BMS. In the ICB assembly 400 having the above configuration, it is very convenient to electrically connect the bus bar plates 300, and the cables from the printed circuit board 420 to the BMS may be combined and wired as one, whereby the line arrangement is very easy.

The temperature sensors 440a, 440b may include two temperature sensors 440a, 440b having different lengths. The relatively long temperature sensor 440a may be used to measure the center temperature of the battery module 10, and the relatively short temperature sensor 440b may be used to measure the outer temperature of the battery module 10.

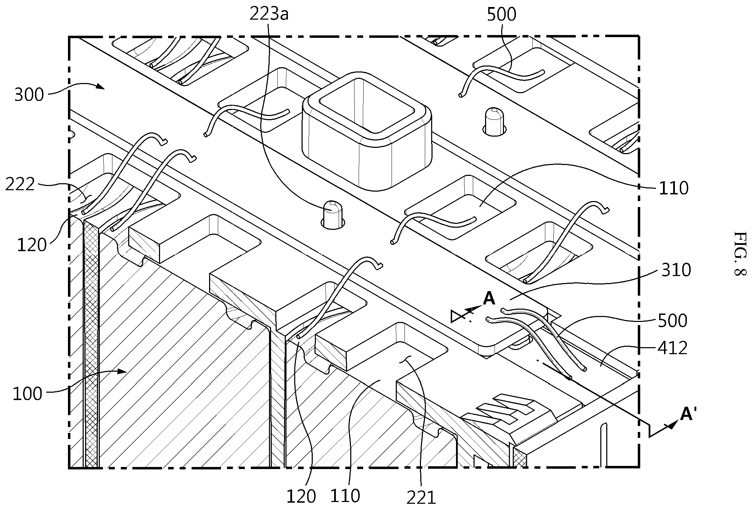

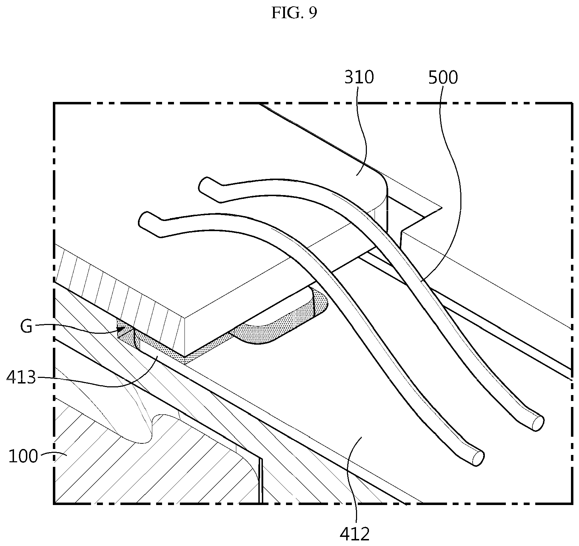

FIG. 7 is a view illustrating an area of a battery module in a state where a bus bar plate and an ICB assembly are assembled according to an embodiment of the present disclosure, FIG. 8 is a partially cut-away perspective view of FIG. 7, and FIG. 9 is a cut-away perspective view taken along line A-A' of FIG. 8.

Referring to the drawings, an electrical connection configuration for sensing voltage of each bank of the battery cells 100 according to an embodiment of the present disclosure will be described in more detail.

As described above, one end of the sensing plate 410, that is, the frame mounting portion 412, is placed in the second plate seating groove 224, and one end 310 of the bus bar plate is placed in the first plate seating groove 223, so that the frame mounting portion 412 of the sensing plate 410 and the one end 310 of the bus bar plate may be partially overlapped up and down. At this time, an adhesive is applied to the surface of the cell frame 200 and the frame mounting portion 412 is seated on the adhesive to fix the sensing plate 410.

In this state, the bus bar plate 300 and the sensing plate 410 are electrically connected by wire 500 bonding. Here, the wire 500 refers to a thin wire 500 having a thickness of about 12.5-350µm and made of a metal material such as gold, aluminum, copper, or the like. The wire bonding method refers to ultrasonic welding in which an end of the wire 500 is pressed with ultrasonic waves. However, wire bonding is not necessarily limited to ultrasonic welding. That is, laser welding, arc welding, or a bonding method using glue may be applied.

In particular, the frame mounting portion 412 of the sensing plate 410 according to the present embodiment may have a rabbit ear part 413 in an approximately 'U' shape, and the second plate seating groove 224 may be provided to be shape-fitted with the rabbit ear part 413 of the frame mounting portion 412.

According to the above configuration, when the frame mounting portion 412 of the sensing plate 410 is seated in the second plate seating groove 224, the adhesive G comes up through the rabbit ear parts 413 and the bus bar plate 300 is placed thereon, and thus, the rabbit ear part 413 and one end 310 of the bus bar plate may be integrally fixed to each other, as shown in FIG. 9. According to the above configuration, even when an external impact or vibration is applied to the battery module 10, the bus bar plate 300 and the sensing plate 410 do not move relative to each other, thereby significantly reducing the possibility of disconnection of the wire 500 due to external impact.

In addition, as described above, the present disclosure is configured to electrically connect the bus bar plates 300 to the ICB assembly 400 by utilizing the edge of the upper surface portion 201 of the cell top frame 220 and one side portion 202 as space-efficiently as possible, so there are advantageous effects in miniaturizing the battery module 10, simplifying the assembly process, and facilitating the electrical wiring work.

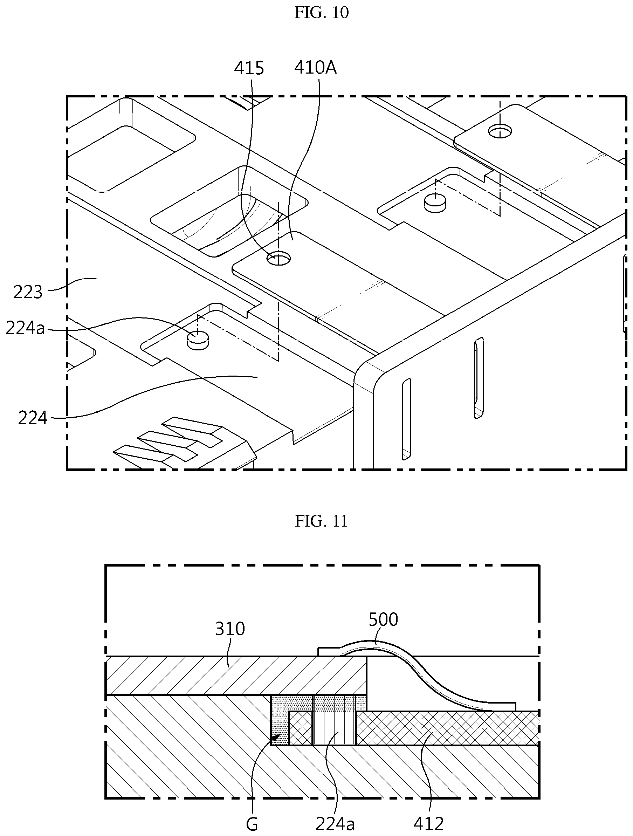

Next, a connection configuration between the bus bar plate 300 and the sensing plate 410A of the battery module 10 according to another embodiment of the present disclosure will be further described with reference to FIGS. 10 and 11.

FIG. 10 is a view illustrating a second plate seating groove and a sensing plate of a battery module according to another embodiment of the present disclosure, and FIG. 11 is a cross-sectional view illustrating an assembly structure of a bus bar plate and a sensing plate according to another embodiment of the present disclosure.

The same reference numbers as in the previous drawings represent the same members, and the repeated description of the same members will be omitted, but differences from the above-described embodiments will be briefly described.

When compared with the battery module 10 of the above-described embodiment, the battery module 10 according to another embodiment of the present disclosure has a difference in the second plate seating groove 224 and the frame mounting portion 412 of the sensing plate 410A.

As shown in FIG. 10, in the case of another embodiment of the present disclosure, the second plate seating groove 224 is provided with an ICB hanging pin 224a formed to protrude from its surface, and the frame mounting portion 412 has a through hole 415 formed in a size corresponding to the diameter of the ICB hanging pin. When placing the frame mounting portion 412 of the sensing plate 410 in the second plate seating groove 224 with the above-described configuration, the ICB hanging pin is inserted into the through hole 415, thereby preventing the sensing plate 410A from moving forward, backward, left, and right. In addition, as in the above-described embodiment, the adhesive G may come up to the upper surface of the frame mounting portion 412 through the through hole 415, so that one end 310 of the bus bar plate may be integrally bonded to the frame mounting portion 412 to be mutually fixed, as shown in FIG. 11.

Therefore, according to another embodiment of the present disclosure, the movement of the bus bar plate 300 is blocked by the bus bar hanging pin 223a, and the movement of the sensing plate 410A is blocked by the ICB hanging pin 224a. Also, one end 310 of the bus bar plate and one end of the sensing plate 410A are vertically overlapped, and the adhesive G is permeated into the overlapped portion, so that the relative movement between the bus bar plate 300 and the sensing plate 410 may be reliably blocked even from external impact or vibration by mutually adhesively fixing one end 310 of the bus bar plate and one end of the sensing plate 410, whereby there is no occurrence of disconnection of the metal wire 500 to which the wire 500 is bonded between them.

Meanwhile, the battery pack (not shown) according to the present disclosure may include one or more of the above-described battery modules. The battery pack may further include, in addition to the battery module, a pack case (not shown) for accommodating the battery module, various devices (not shown) for controlling the charge/discharge of the battery module, such as a battery management system (BMS), a current sensor, a fuse, and the like.

The terms indicating directions as used herein such as upper, lower, left, and right are used for convenience of description only, and it is obvious to those skilled in the art that the terms may change depending on the position of the stated element or an observer.

## Claims

1. A battery module (10) comprising:
battery cells (100) having a battery can (120) and a top cap (110) coupled to the battery can (120);
a cell frame (200) provided to accommodate and fix the battery cells (100) therein;
bus bar plates (300) spaced apart from each other and disposed on an outer side of the cell frame (200) and electrically connected to the battery cells (100); and
an inter connection board (ICB) assembly (400) having sensing plates (410) electrically connected to the bus bar plates (300), respectively, and mounted on the other outer side of the cell frame (200),
wherein each of the bus bar plates (300) and each of the sensing plates (410) have portions that overlap partially in an up-down direction and are integrally fixed to each other so as not to move relative to each other, and are electrically connected by a conductive wire (500),
**characterized in that** one end of the sensing plate (410) is positioned under one end of the bus bar plate (300), and this one end of the sensing plate (410) has a 'U'-shaped rabbit ear part (413).

2. The battery module (10) according to claim 1,
wherein the one end of the sensing plate (410) is seated on an adhesive applied to the surface of the cell frame (200), and the one end of the bus bar plate (300) is mutually bonded to the one end of the sensing plate (410) by the adhesive coming up through the rabbit ear part (413).

3. The battery module (10) according to claim 1,
wherein the cell frame (200) comprises a side portion (202) forming a wall surrounding the outside of the entire battery cells (100) and an upper surface portion (201) covering the top of the battery cells (100), and
the one end of the bus bar plates (300) and the one end of the sensing plates (410) are disposed to overlap each other at one edge of the upper surface portion (201).

4. The battery module (10) according to claim 3,
wherein the ICB assembly (400) further comprises a printed circuit board (420) to which the sensing plates (410) are coupled; and a cable connector (430) mounted on the printed circuit board (420),
wherein the printed circuit board (420) is disposed such that a plate surface thereof faces a side portion of the cell frame (200).

5. The battery module (10) according to claim 4,
wherein the sensing plate (410) is provided in a '¬' shape, and comprises a substrate mounting portion (411) attached to the printed circuit board (420) and a frame mounting portion (412) bent and extended with respect to the substrate mounting portion (411),
wherein the frame mounting portion (412) is disposed to face an edge surface of the upper surface portion of the cell frame (200).

6. The battery module (10) according to claim 3,
wherein the upper surface portion (201) comprises:
first plate seating grooves (223) extending along the lengthwise direction of the cell frame (200) to be provided at predetermined intervals along the widthwise direction of the cell frame (200), and provided to allow the bus bar plate (300) to be seated; and
second plate seating grooves (224) provided at one edge of the cell frame (200) and straightly connected to each of the first plate seating grooves (223), the surface of which is formed lower than the first plate seating grooves (223), and provided to allow the sensing plate (410) to be seated.

7. The battery module (10) according to claim 6,
wherein the first plate seating groove (223) has a bus bar hanging pin (223a) formed to protrude from the surface thereof, and the bus bar plate (300) has a pin hole (H) into which the bus bar hanging pin (223a) can be inserted.

8. The battery module (10) according to claim 6,
wherein the second plate seating groove (224) is provided to be shape-fitted with the rabbit ear part (413) of the sensing plate (410).

9. The battery module (10) according to claim 1,
wherein the cell frame (200) comprises:
a cell bottom frame (210) having cell insertion holes capable of respectively inserting lower regions of the battery cells (100); and
a cell top frame (220) that covers upper regions of the battery cells (100) and is provided to be coupled to the cell bottom frame (210).

10. The battery module (10) according to claim 9,
wherein the battery cells (100) are cylindrical battery cells, and are inserted into the cell bottom frame (210) to be disposed so that the top cap (110) faces the cell top frame (220).

11. The battery module (10) according to claim 10,
wherein the cell top frame (220) comprises an upper surface portion (201) covering the upper side of the battery cells (100),
wherein the upper surface portion (201) has first holes (221) perforated so that each top cap (110) of the battery cells (100) can be exposed to the outside, and second holes (222) perforated so that the upper ends of each battery can (120) of the battery cells (100) can be partially exposed to the outside.

12. The battery module (10) according to claim 11,
wherein each of the bus bar plates (300) is connected to the top cap (110) exposed through the first holes (221) or the upper end of the battery can (120) exposed through the second holes (222) by the conductive wires (500).

13. The battery module (10) according to claim 1,
wherein one end of the sensing plate (410) is positioned under one end of the bus bar plate (300), and an ICB hanging pin (224a) formed to protrude from the surface of the cell frame (200) on which one end of the sensing plate (410) is seated is provided,
wherein the one end of the sensing plate (410) has a through hole (415) into which the ICB hanging pin (224a) can be inserted.

14. A battery pack comprising the battery module (10) according to any one of claims 1 to 13.

## Patentansprüche

1. Batteriemodul (10), umfassend:
Batteriezellen (100), welche eine Batteriedose (120) und einen oberen Deckel (110) aufweisen, welcher mit der Batteriedose (120) gekoppelt ist;
einen Zellenrahmen (200), welcher bereitgestellt ist, um die Batteriezellen (100) darin aufzunehmen und zu fixieren;
Sammelschienenplatten (300), welche voneinander beabstandet sind und an einer äußeren Seite des Zellenrahmens (200) angeordnet sind und mit den Batteriezellen (100) elektrisch verbunden sind; und
eine Zwischenverbindungsplatinen-(ICB)-Anordnung (400), welche Messplatten (410) aufweist, welche jeweils mit den Sammelschienenplatten (300) elektrisch verbunden sind und an der anderen äußeren Seite des Zellenrahmens (200) angebracht sind,
wobei jede der Sammelschienenplatten (300) und jede der Messplatten (410) Abschnitte aufweist, welche sich teilweise in der Oben-Unten-Richtung überlagern, und integral aneinander fixiert sind, so dass sie sich nicht relativ zueinander bewegen, und durch eine leitfähige Leitung (500) elektrisch verbunden sind,
**dadurch gekennzeichnet, dass** ein Ende der Messplatte (410) unter einem Ende der Sammelschienenplatte (300) positioniert ist und dieses eine Ende der Messplatte (410) einen "U"-förmigen Hasenohrenteil (413) aufweist.

2. Batteriemodul (10) nach Anspruch 1,
wobei das eine Ende der Messplatte (410) auf einen Klebstoff gesetzt ist, welcher auf der Fläche des Zellenrahmens (200) aufgebracht ist, und das andere Ende der Sammelschienenplatte (300) gegenseitig mit dem einen Ende der Messplatte (410) durch den Klebstoff verklebt ist, welcher durch den Hasenohrenteil (413) nach oben kommt.

3. Batteriemodul (10) nach Anspruch 1,
wobei der Zellenrahmen (200) einen seitlichen Abschnitt (202), welcher eine Wand bildet, welche das Äußere der gesamten Batteriezellen (100) umgibt, und einen oberen Flächenabschnitt (201) umfasst, welcher das Obere der Batteriezellen (100) bedeckt, und
das eine Ende der Sammelschienenplatten (300) und das eine Ende der Messplatten (410) angeordnet sind, um einander an einem Rand des oberen Flächenabschnitts (201) zu überlagern.

4. Batteriemodul (10) nach Anspruch 3,
wobei die ICB-Anordnung (400) ferner eine gedruckte Schaltungsplatine (420), mit welcher die Messplatten (410) gekoppelt sind; und einen Kabelverbinder (430) umfasst, welcher an der gedruckten Schaltungsplatine (420) angebracht ist,
wobei die gedruckte Schaltungsplatine (420) derart angeordnet ist, dass eine Plattenfläche davon einem seitlichen Abschnitt des Zellenrahmens (200) zugewandt ist.

5. Batteriemodul (10) nach Anspruch 4,
wobei die Messplatte (410) in einer "¬"-Form bereitgestellt ist und einen Substratanbringungsabschnitt (411), welcher an der gedruckten Schaltungsplatine (420) befestigt ist, und einen Rahmenanbringungsabschnitt (412) umfasst, welcher gebogen ist und sich in Bezug auf den Substratanbringungsabschnitt (411) verlängert,
wobei der Rahmenanbringungsabschnitt (412) angeordnet ist, um einer Randfläche des oberen Flächenabschnitts des Zellenrahmens (200) zugewandt zu sein.

6. Batteriemodul (10) nach Anspruch 3,
wobei der obere Flächenabschnitt (201) umfasst:
erste Plattensetznuten (223), welche sich entlang der Längsrichtung des Zellenrahmens (200) erstrecken, um in vorbestimmten Intervallen entlang der Breitenrichtung des Zellenrahmens (200) bereitgestellt zu sein, und bereitgestellt sind, um der Sammelschienenplatte (300) zu ermöglichen, gesetzt zu werden; und
zweite Plattensetznuten (224), welche an einem Rand des Zellenrahmens (200) bereitgestellt sind und gerade mit jeder der ersten Plattensetznuten (223) verbunden sind, wobei die Fläche davon niedriger als die ersten Plattensetznuten (223) ausgebildet ist, und bereitgestellt sind, um der Messplatte (410) zu ermöglichen, gesetzt zu werden.

7. Batteriemodul (10) nach Anspruch 6,
wobei die erste Plattensetznut (223) einen Sammelschienen-Aufhänge-Zapfen (223a) aufweist, welcher gebildet ist, um von der Fläche davon vorzustehen, und die Sammelschienenplatte (300) ein Zapfenloch (H) aufweist, in welches der Sammelschienen-Aufhänge-Zapfen (223a) eingeführt werden kann.

8. Batteriemodul (10) nach Anspruch 6,
wobei die zweite Plattensetznut (224) bereitgestellt ist, um mit dem Hasenohrteil (413) der Messplatte (410) formangepasst zu sein.

9. Batteriemodul (10) nach Anspruch 1,
wobei der Zellenrahmen (200) umfasst:
einen unteren Zellenrahmen (210), welcher Zelleneinführlöcher aufweist, welche in der Lage sind, jeweils untere Bereiche der Batteriezellen (100) eizuführen; und
einen oberen Zellenrahmen (220), welcher obere Bereiche der Batteriezellen (100) bedeckt und bereitgestellt ist, um mit dem unteren Zellenrahmen (210) gekoppelt zu sein.

10. Batteriemodul (10) nach Anspruch 9,
wobei die Batteriezellen (100) zylindrische Batteriezellen sind und in den unteren Zellenrahmen (210) eingeführt sind, um angeordnet zu sein, so dass der obere Deckel (110) dem oberen Zellenrahmen (220) zugewandt ist.

11. Batteriemodul (10) nach Anspruch 10,
wobei der obere Zellenrahmen (220) einen oberen Flächenabschnitt (201) umfasst, welcher die obere Seite der Batteriezellen (100) bedeckt,
wobei der obere Flächenabschnitt (201) erste Löcher (221), welche perforiert sind, so dass jeder obere Deckel (110) der Batteriezellen (100) nach außen freigelegt sein kann, und zweite Löcher (222) aufweist, welche perforiert sind, so dass die oberen Enden jeder Batteriedose (120) der Batteriezellen (100) teilweise nach außen freigelegt sein können.

12. Batteriemodul (10) nach Anspruch 11,
wobei jede der Sammelschienenplatten (300) mit dem oberen Deckel (110), welcher durch die ersten Löcher (221) freigelegt ist, oder dem oberen Ende der Batteriedose (120), welches durch die zweiten Löcher (222) freigelegt ist, durch die leitfähigen Leitungen (500) verbunden ist.

13. Batteriemodul (10) nach Anspruch 1,
wobei ein Ende der Messplatte (410) unter einem Ende der Sammelschienenplatte (300) positioniert ist, und ein ICB-Aufhänge-Zapfen (224a) bereitgestellt ist, welcher gebildet ist, um von der Fläche des Zellenrahmens (200) vorzustehen, an welcher ein Ende der Messplatte (410) gesetzt ist,
wobei das eine Ende der Messplatte (410) ein Durchgangsloch (415) aufweist, in welches der ICB-Aufhänge-Zapfen (224a) eingeführt werden kann.

14. Batteriepack, umfassend das Batteriemodul (10) nach einem der Ansprüche 1 bis 13.

## Revendications

1. Module de batterie (10) comprenant :
des cellules de batterie (100) présentant un boîtier de batterie (120) et un capuchon supérieur (110) couplé au boîtier de batterie (120) ;
un cadre de cellules (200) prévu pour loger et fixer les cellules de batterie (100) à l'intérieur de celui-ci ;
des plaques de barre omnibus (300) espacées les unes des autres et disposées sur un côté extérieur du cadre de cellules (200) et connectées électriquement aux cellules de batterie (100) ; et
un ensemble carte d'interconnexion (ICB) (400) présentant des plaques de détection (410) connectées électriquement aux plaques de barre omnibus (300), respectivement, et montées sur l'autre côté extérieur du cadre de cellules (200),
dans lequel chacune des plaques de barre omnibus (300) et chacune des plaques de détection (410) présentent des parties qui se chevauchent partiellement dans une direction haut-bas et sont fixées d'un seul tenant les unes aux autres de manière à ne pas se déplacer les unes par rapport aux autres, et sont connectées électriquement par un fil conducteur (500),
**caractérisé en ce qu'**une extrémité de la plaque de détection (410) est placée sous une extrémité de la plaque de barre omnibus (300), et cette extrémité de la plaque de détection (410) présente une partie en oreille de lapin en forme de « U » (413).

2. Module de batterie (10) selon la revendication 1,
dans lequel l'extrémité de la plaque de détection (410) est positionnée sur un adhésif appliqué sur la surface du cadre de cellules (200) et l'extrémité de la plaque de barre omnibus (300) est mutuellement collée à l'extrémité de la plaque de détection (410) par l'adhésif qui remonte à travers la partie en oreille de lapin (413).

3. Module de batterie (10) selon la revendication 1,
dans lequel le cadre de cellules (200) comprend une partie latérale (202) formant une paroi entourant l'extérieur de l'ensemble des cellules de batterie (100) et une partie de surface supérieure (201) recouvrant le dessus des cellules de batterie (100), et
l'extrémité des plaques de barre omnibus (300) et l'extrémité des plaques de détection (410) sont disposées pour se chevaucher au niveau d'un bord de la partie de surface supérieure (201).

4. Module de batterie (10) selon la revendication 3,
dans lequel l'ensemble ICB (400) comprend en outre une carte de circuit imprimé (420) à laquelle les plaques de détection (410) sont couplées ; et un connecteur de câble (430) monté sur la carte de circuit imprimé (420),
dans lequel la carte de circuit imprimé (420) est disposée de sorte qu'une surface de plaque de celle-ci soit orientée vers une partie latérale du cadre de cellules (200).

5. Module de batterie (10) selon la revendication 4,
dans lequel la plaque de détection (410) est fournie sous une forme de « ¬ » et comprend une partie de montage de substrat (411) fixée à la carte de circuit imprimé (420) et une partie de montage de cadre (412) courbée et étendue par rapport à la partie de montage de substrat (411),
dans lequel la partie de montage de cadre (412) est disposée pour être orientée vers une surface de bord de la partie de surface supérieure du cadre de cellules (200).

6. Module de batterie (10) selon la revendication 3,
dans lequel la partie de surface supérieure (201) comprend :
de premières rainures de positionnement de plaque (223) s'étendant le long de la direction longitudinale du cadre de cellules (200) pour être ménagées à des intervalles prédéterminés le long de la direction longitudinale du cadre de cellules (200), et ménagées pour permettre le positionnement de la plaque de barre omnibus (300) ; et
de deuxièmes rainures de positionnement de plaque (224) ménagées au niveau d'un bord du cadre de cellules (200) et connectées directement à chacune des premières rainures de positionnement de plaque (223), dont la surface est formée plus bas que les premières rainures de positionnement de plaque (223), et ménagées pour permettre le positionnement de la plaque (410) de détection.

7. Module de batterie (10) selon la revendication 6,
dans lequel la première rainure de positionnement de plaque (223) présente une broche de suspension de barre omnibus (223a) formée pour faire saillie à partir de sa surface, et la plaque de barre omnibus (300) présente un trou de broche (H) dans lequel la broche de suspension de barre omnibus (223a) peut être insérée.

8. Module de batterie (10) selon la revendication 6,
dans lequel la forme de la deuxième rainure de positionnement de plaque (224) est prévue pour être ajustée à la partie en oreille de lapin (413) de la plaque de détection (410).

9. Module de batterie (10) selon la revendication 1,
dans lequel le cadre de cellules (200) comprend :
un cadre inférieur de cellules (210) présentant des trous d'insertion de cellules capables d'insérer respectivement des régions inférieures des cellules de batterie (100) ; et
un cadre supérieur de cellules (220) qui recouvre des régions supérieures des cellules de batterie (100) et est prévu pour être couplé au cadre inférieur de cellules (210).

10. Module de batterie (10) selon la revendication 9,
dans lequel les cellules de batterie (100) sont des cellules de batterie cylindriques et sont insérées dans le cadre inférieur de cellules (210) pour être disposées de sorte que le capuchon supérieur (110) soit orienté vers le cadre supérieur de cellules (220).

11. Module de batterie (10) selon la revendication 10,
dans lequel le cadre supérieur de cellules (220) comprend une partie de surface supérieure (201) recouvrant le côté supérieur des cellules de batterie (100),
dans lequel la partie de surface supérieure (201) présente de premiers trous (221) perforés de sorte que chaque capuchon supérieur (110) des cellules de batterie (100) puisse être exposé à l'extérieur, et de deuxièmes trous (222) perforés de sorte que les extrémités supérieures de chaque boîtier de batterie (120) des cellules de batterie (100) puissent être partiellement exposées à l'extérieur.

12. Module de batterie (10) selon la revendication 11,
dans lequel chacune des plaques de barre omnibus (300) est connectée au capuchon supérieur (110) exposé à travers les premiers trous (221) ou à l'extrémité supérieure du boîtier de batterie (120) exposée à travers les deuxièmes trous (222) par les fils conducteurs (500).

13. Module de batterie (10) selon la revendication 1,
dans lequel une extrémité de la plaque de détection (410) est placée sous une extrémité de la plaque de barre omnibus (300), et une broche de suspension d'ICB (224a) formée pour faire saillie à partir de la surface du cadre de cellules (200) sur laquelle est positionnée une extrémité de la plaque de détection (410) est prévue,
dans lequel l'extrémité de la plaque de détection (410) présente un trou traversant (415) dans lequel la broche de suspension d'ICB (224a) peut être insérée.

14. Bloc-batterie comprenant le module de batterie (10) selon l'une quelconque des revendications 1 à 13.
